Europäisches Patentamt

European Patent Office

Office européen des brevets

(11) Publication number: **0 423 351 A1**

# EUROPEAN PATENT APPLICATION
## published in accordance with Art. 158(3) EPC

(21) Application number: 90903416.7

(22) Date of filing: 23.02.90

(86) International application number:
PCT/JP90/00224

(87) International publication number:
WO 90/10260 (07.09.90 90/21)

(51) Int. Cl.⁵: **G05B 13/00**

(30) Priority: 23.02.89 JP 41777/89

(43) Date of publication of application:
**24.04.91 Bulletin 91/17**

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(72) Inventor: **TORII, Nobutoshi**

Room 308, Fuyohatsu, 65-4, Takakura-cho
Hachioji-shi, Tokyo 192(JP)
Inventor: **NIHEI, Ryo, c/o Room 7-201, FANUC**
**Manshonharimomi**
**3539-1, Shibokusa, Oshino-mura**
**Minamitsuru-gun, Yamanashi 401-05(JP)**

(74) Representative: **Billington, Lawrence Emlyn et**
al
**HASELTINE LAKE & CO Hazlitt House 28**
**Southampton Buildings Chancery Lane**
**London WC2A 1AT(GB)**

(54) **METHOD OF SLIDING MODE CONTROL.**

(57) A method of sliding mode control for realizing a control system which exhibits strong robustness and excellent control stability. A processor of a digital servo circuit of a servo control system includes a position loop that effects proportional control, a speed loop that effects proportional-plus-integral control to calculate a torque instruction, and a current loop that responds to the torque instruction. The processor calculates a position deviation (x1), the differential (x2) of the position deviation, the integral (x3) of the differential of position deviation, and the integral (x4) of the position deviation (100 to 103) based upon an instructed position ($\theta$r), the actual position ($\theta$) and actual speed ($\dot{\theta}$), and further calculates a switching surface (s = x2 + C.x1 + K.x3 + K.Kp.x4) in the sliding mode control and a discrimination reference value (Kp.x1 + x2) . The processor further calculates switching quantities (($\tau'$,$\tau''$)) that enable the characteristics of the control system to be converged on the switching surface depending on the switching surface, position deviation and discrimination reference value of positive or negative sign, and the motor is operated according to a torque instruction ($\tau$ = $\tau'$ + $\tau''$) obtained by adding them up together. The robust control system controlled by the sliding mode does not permit the characteristics to change even when the motor inertia undergoes a change.

FIG.I

## SLIDING MODE CONTROL METHOD

Technical Field

The present invention relates to a sliding mode control method capable of realizing a control system improved in robustness and excellent in control stability.

Background Art

Conventionally, in control systems provided with various control loops such as a position control loop, adjustments of various loop gains, etc. are made so as to control the sensitivity to disturbances and to variations in the plant parameters, to thereby realize a robust control system capable of preventing occurrences of variations in characteristics of the control system even when the plant parameters are varied. With this method, however, it is sometimes difficult to realize a robust control system.

Therefore, recently, an attempt has been made to provide a robust control system by using a sliding mode control. In this case, however, it is sometimes impossible to realize a control system having an excellent control stability.

Disclosure of the Invention

An object of the present invention is to provide a sliding mode control method capable of realizing a control system improved in robustness and excellent in control stability.

In order to achieve the above object, a sliding mode control method of the present invention comprises the steps of: (a) determining a switching plane of sliding mode control in accordance with at least one predetermined parameter representing characteristics of a control system having a position control loop and a velocity control loop for effecting integral control to calculate a control output; and (b) calculating the control output such that the control output converges to the switching plane.

Preferably, the sliding mode control method is applied to a control system having a position control loop for effecting proportional control, a velocity control loop for effecting proportional-plus-integral control to calculate a torque command as the control output, and a current control loop responsive to the torque command.

As described above, according to the present invention, the control output is calculated so as to converge to the switching plane of the sliding mode control determined in accordance with at least one predetermined parameter representing the characteristics of a control system. Accordingly, no variation occurs in the characteristics of the control system even when the plant parameters relating to the control system are varied, and thus a robust control system can be realized. Further, since the integral control is effected in the velocity control loop, a steady-state deviation can be reduced, thus improving the stability of the control system. Preferably, the method is applied to a control system having position, velocity and current control loops, and a torque command as the control output is calculated.

Brief Description of the Drawings

Fig. 1 is a block diagram showing a motor control system to which a conventional sliding mode control method is applied;

Fig. 2 is a block diagram showing a motor control system to which a sliding mode control method according to the present invention is applied;

Fig. 3 is a schematic block diagram showing a digital servo control system for embodying a sliding mode control method according to one embodiment of the present invention;

Fig. 4 is a flowchart of a sliding mode controlling process executed by a digital servo circuit shown in Fig. 3; and

Fig. 5 is a diagram showing, by way of example, a switching plane in sliding mode control.

Best Mode of Carrying Out the Invention

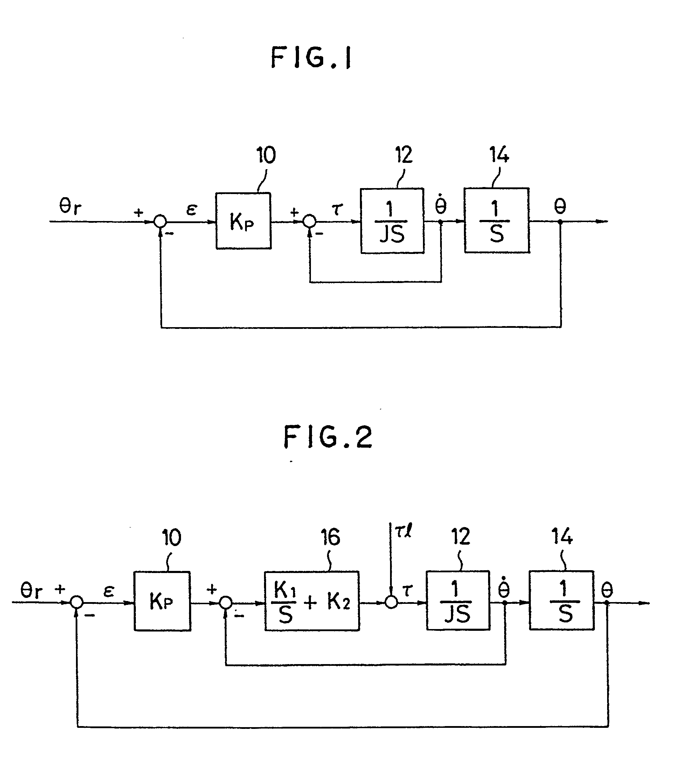

Referring to Fig. 1, a motor control system to which a conventional sliding mode control method is applied includes a transfer element 10 having a proportional gain of Kp. In this transfer element 10, the difference (position deviation) $\epsilon$ between a command position $\theta r$ and an actual position $\theta$ from a transfer element 14 is multiplied by the proportional gain Kp, to generate a velocity command. Then, a torque command $\tau$ corresponding to the difference (speed deviation) between a velocity command and an actual velocity $\dot{\theta}$ is derived, and an electric current corresponding to the torque command $\tau$ is supplied to a motor indicated as a transfer element 12, whereby the motor is rotated at a speed $\dot{\theta}$. In Fig. 1, symbol J denotes the inertia of the motor.

In the block diagram of Fig. 1, the relationship expressed by equation (1) stands between the input and output sides of the motor.

$$J \cdot \ddot{\theta} = \tau \qquad \ldots (1$$

Further, the motor control system of Fig. 1 can be expressed by equations (2), using the position deviation $\epsilon$.

$$\begin{aligned} \varepsilon &= \theta r - \theta \\ \dot{\varepsilon} &= -\dot{\theta} \\ \ddot{\varepsilon} &= -\ddot{\theta} \end{aligned} \qquad \ldots (2)$$

where $\dot{\theta}$ and $\ddot{\theta}$ respectively represent the first and second derivatives of $\theta$, and $\dot{\epsilon}$ and $\ddot{\epsilon}$ respectively represent the first and second derivatives of $\epsilon$.

By substituting equation (2) into equation (1), equation (3) is derived.

$$J \cdot \ddot{\varepsilon} = -\tau \qquad \ldots (3)$$

Here, the switching input (torque command) $\tau$ for that control system can be given by equation (4), which system has characteristics represented by the characteristic equation $J \cdot \ddot{\epsilon} + J \cdot \omega c \cdot \dot{\epsilon} + J \cdot Kp \cdot \omega c \cdot \epsilon = 0$.

$$\tau = J0 \cdot \omega c \cdot \dot{\varepsilon} + J0 \cdot Kp \cdot \omega c \cdot \varepsilon + \tau' \qquad \ldots (4)$$

where J0 represents a minimum inertia, $\omega c$ represents a cut-off frequency of the velocity loop, and $\tau'$ represents a switching amount.

The following equation (5) can be obtained by substituting equation (4) into equation (3).

$$\ddot{\varepsilon} = -(J0/J)\omega c \cdot \dot{\varepsilon} - (J0/J)Kp \cdot \omega c \cdot \varepsilon - \tau'/J \qquad \ldots (5)$$

Here, a switching plane s can be given by equation (6), and the Lyapunov function associated with the switching plane s can be given by equation (7).

$$s = C \cdot \varepsilon + \dot{\varepsilon} \qquad \ldots (6)$$

$$V = (1/2)s^2 \qquad \ldots (7)$$

The Lyapunov function V constantly decreases and converges to zero, if it is always positive and the minimum value thereof is zero and if the relationship $\dot{V} < 0$ is always satisfied. In other words, the

3

characteristics of the control system converge to the switching plane $\underline{s}$ . To obtain the required conditions, at first, $\dot{v}$ will be derived.

By differentiating both sides of equations (7) and (6), we obtain the following equations (8) and (9).

$$\dot{V} = s \cdot \dot{s} \qquad \qquad \dots (8)$$
$$\dot{s} = C \cdot \dot{\varepsilon} + \ddot{\varepsilon} \qquad \qquad \dots (9)$$

By substituting equation (5) into equation (9) and arranging it, equation (10) is obtained.

$$\dot{s} = \{C - (J0/J)\omega c\} \cdot \dot{\varepsilon} - (J0/J)Kp \cdot \omega c \cdot \varepsilon - (\tau'/J) \qquad \dots (10)$$

From equations (10) and (6), equation (11) is derived.

$$\dot{s} = s\{C - (J0/J)\omega c\} - [C^2 \cdot \varepsilon + \{(J0/J)Kp \cdot \omega c - (J0/J)\omega c \cdot C\}\varepsilon + (\tau'/J)] \qquad \dots (11)$$

Assuming that, in equation (11), a constant C is equal to the proportional gain Kp, and the proportional gain Kp is equal to 1/n times the cut-off frequency $\omega c$, then equation (12) can be obtained.

$$\dot{s} = s \cdot \omega c\{(1/n)-(J0/J)\} - (\omega c/n)^2 \cdot \varepsilon + \tau'/J \qquad \dots (12)$$

Next, equation (13) representing V is obtained by substituting equation (12) into equation (8).

$$V = s^2 \omega c\{(1/n)-(J0/J)\} - s\{(\omega c/n)^2 \cdot \varepsilon + \tau'/J\} \qquad \dots (13)$$

Now, the conditions in which $\dot{v} < 0$ is fulfilled are derived. In order to satisfy the relationship $\dot{v} < 0$, the second term of the right side of the equation must be negative when the inertia J is smaller than nJ0, that is, when the first term of the right side of equation (13) is negative. In other words, the following relationship (14) must be satisfied.

$$-s\{(\omega c/n)^2 \cdot \varepsilon + \tau'/J\} < 0 \qquad \dots (14)$$

Next, the conditions for satisfying formula (14) are derived according to whether $\underline{s}$ is negative or positive.

(i) When s > 0, expression (15) or expression (16) must be satisfied.

$$(\omega c/n)^2 \cdot \varepsilon + \tau'/J > 0 \qquad \dots (15)$$
$$\tau' > -(\omega c/n)^2 \cdot \varepsilon \cdot J \qquad \dots (16)$$

When s > 0 and $\epsilon$ > 0 stand, $\tau'$ expressed by equation (17) satisfies the relationship (16). On the other hand, when s > 0 and $\epsilon$ < 0 stand, $\tau'$ expressed by equation (18) satisfies the relationship (16).

$$\tau' = -(\omega c/n)^2 \cdot J0 \cdot \varepsilon + (\omega c/n)^2 \cdot \varepsilon \cdot J0 \cdot \alpha \qquad \ldots (17)$$

$$\tau' = -(\omega c/n)^2 \cdot nJ0 \cdot \varepsilon + (\omega c/n)^2 \cdot J0 \cdot \varepsilon \cdot \alpha \qquad \ldots (18)$$

where $\alpha$ denotes a preset value.

(ii) When s < 0, the following relationship (19) or (20) must be satisfied.

$$(\omega c/n)^2 \cdot \varepsilon + \tau'/J < 0 \qquad \ldots (19)$$

$$\tau' < -(\omega c/n)^2 \cdot \varepsilon \cdot J \qquad \ldots (20)$$

When s < 0 and $\epsilon$ > 0 stand, $\tau'$ expressed by equation (21) satisfies the relationship (20), and when s < 0 and $\epsilon$ < 0 stand, $\tau'$ expressed by equation (22) satisfies the relationship (20).

$$\tau' = -(\omega c/n)^2 \cdot nJ0 \cdot \varepsilon - (\omega c/n)^2 \cdot J0 \cdot \varepsilon \cdot \alpha \qquad \ldots (21)$$

$$\tau' = -(\omega c/n)^2 \cdot J0 \cdot \varepsilon + (\omega c/n)^2 \cdot \varepsilon \cdot J0 \cdot \alpha \qquad \ldots (22)$$

Thus, the switching amount (nonlinear input) $\tau'$ permitting the characteristics of the control system to converge to the switching plane s is derived in the aforementioned manner. The switching amount $\tau'$ is derived by a corresponding one of equations (17), (18), (21) and (22), depending on whether the switching plane s and the position deviation $\epsilon$ are positive or negative, and the motor is driven in accordance with the torque command $\tau$ corresponding to the derived value $\tau'$.

In this case, the Lyapunov stability conditions are satisfied, and accordingly, the characteristics of the motor control system of Fig. 1 converge to the switching plane s and the response characteristics of the control system are determined by the switching plane s . In other words, even when the plant parameters relating to the motor control system, such as inertia, are varied, no variations in the characteristics of the control system occur. Namely, a robust motor control system can be realized. However, the above-described conventional control system shown in Fig. 1 sometimes lacks control stability.

Referring to Fig. 2, a motor control system to which a sliding mode control method according to one embodiment of the present invention is applied is intended to improve the control stability, and differs from the control system of Fig. 1 in that it comprises a transfer element 16 which has the integral gain K1 and the proportional gain K2. In the drawing, symbol $\tau1$ denotes a disturbance torque.

In the block diagram of Fig. 2, equations (23) and (24) are fulfilled.

$$J \cdot \ddot{\theta} = \{Kp(\theta r - \theta) - \dot{\theta}\} \cdot \{(K1/S) + K2\} + \tau1 \qquad \ldots (23)$$

$$\left.\begin{array}{l} \varepsilon = \theta r - \theta \\ \dot{\varepsilon} = -\dot{\theta} \\ \ddot{\varepsilon} = -\ddot{\theta} \\ J \cdot \ddot{\theta} = \tau \\ J \cdot \ddot{\varepsilon} = -\tau \end{array}\right\} \qquad \ldots (24)$$

By substituting equation (24) into equation (23) and arranging it, the following equation (25) is obtained. Equation (25) indicates that the switching plane $\underline{s}$ is constituted by $\epsilon$, $\epsilon$, $\int_\epsilon$ and $\int \epsilon$.

$$\ddot{\varepsilon} + (K2/J)\dot{\varepsilon} + (K2 \cdot Kp/J)\varepsilon + (K1/J) \cdot \int \dot{\varepsilon} +$$
$$(Kp \cdot K1/J)\int \varepsilon + \tau 1/J = 0 \qquad \ldots \quad (25)$$

Here, provided that $K2/J = \omega c$, $Kp = \omega c/n$, $K1/J = \omega s$ and $\tau 1 = 0$, equation (26) is derived from equation (25).

$$\ddot{\varepsilon} + \omega c \cdot \dot{\varepsilon} + \omega c \cdot Kp \cdot \varepsilon + \omega s \cdot \int \dot{\varepsilon} +$$
$$\omega s \cdot Kp \cdot \int \varepsilon = 0 \qquad \ldots \quad (26)$$

The former half of equation (26) greatly influential when the position deviation $\epsilon$ is large and the latter half thereof greatly affected by the integral element are respectively expressed by equations (27) and (28).

$$\ddot{\varepsilon} + \omega c \cdot \dot{\varepsilon} + \omega c \cdot Kp \cdot \varepsilon = 0 \qquad \ldots \quad (27)$$
$$\omega s \cdot \int \dot{\varepsilon} + \omega s \cdot Kp \cdot \int \varepsilon = 0 \qquad \ldots \quad (28)$$

When equation (29) is satisfied in equation (27), equations (30) and (31) can be derived from equation (27).

$$\dot{\varepsilon} + C \cdot \varepsilon = 0 \qquad \ldots \quad (29)$$
$$-C \cdot \dot{\varepsilon} + \omega c \cdot \dot{\varepsilon} + \omega c \cdot Kp \cdot \varepsilon = 0 \qquad \ldots \quad (30)$$
$$(\omega c - C)\{\dot{\varepsilon} + \omega c \cdot Kp \cdot \varepsilon /(\omega c - C)\} = 0$$
$$\qquad \ldots \quad (31)$$

Here, when $\omega c \cdot Kp/(\omega c - C) = 0$ is fulfilled, equation (32) representing the phase plane can be derived from equation (31).

$$(\omega c - C) \cdot (\dot{\varepsilon} + C\varepsilon) = 0 \qquad \ldots \quad (32)$$

Further, when equation (28) is satisfied, equation (33) representing the phase plane stands.

$$(K1/J) \cdot (\int \dot{\varepsilon} + Kp \cdot \int \varepsilon) = 0 \qquad \ldots \quad (33)$$

Then, when equations (32) and (33) are both satisfied, equation (34) representing the phase plane stands.

$$\dot{\varepsilon} + C \cdot \varepsilon + K(\int \dot{\varepsilon} + Kp \cdot \int \varepsilon) = 0 \qquad \ldots \quad (34)$$

where symbol K represents the gain of the integral action.

Next, the conditions for the Lyapunov function V ($= (1/2)s^2$) to satisfy $\dot{V} < 0$ are derived. At first, equations (35) and (36) are derived from equation (34).

$$s = \dot{\varepsilon} + C \cdot \varepsilon + K( \int \dot{\varepsilon} + Kp \cdot \int \varepsilon ) \qquad \ldots (35)$$

$$\dot{s} = \ddot{\varepsilon} + C \cdot \dot{\varepsilon} + K( \dot{\varepsilon} + Kp \cdot \varepsilon ) \qquad \ldots (36)$$

Therefore, the inequality $\dot{V} < 0$ can be expressed by formula (37).

$$\dot{V} = s( \ddot{\varepsilon} + C \cdot \dot{\varepsilon} ) + s( \dot{\varepsilon} + Kp \cdot \varepsilon ) \cdot K < 0 \qquad \ldots (37)$$

The first term $s(\ddot{\varepsilon} + C\dot{\varepsilon})$ of formula (37) corresponds to equations (8) and (9). Therefore, the switching amount (nonlinear input) $\tau'$ relating to the first term and causing the characteristics of the control system to converge to the switching plane s is derived in accordance with equations (17), (18), (21) and (22).

The inequality relating to the second term of formula (37) and corresponding to formula (14) is expressed by the following formula (38).

$$s\{ ( \dot{\varepsilon} + Kp \cdot \varepsilon )K + \tau''/J \} < 0 \qquad \ldots (38)$$

In order to derive the switching amount (nonlinear input) $\tau''$ which satisfies the relationship (38), $\epsilon = x2$ and $\epsilon = x1$ are substituted into formula (38), thereby obtaining formula (39).

$$s\{ K(Kp \cdot x1 + x2) + \tau''/J \} < 0 \qquad \ldots (39)$$

Next, the conditions for fulfilling the relationship (39) are derived according to whether the switching plane s is positive or negative.

(i) When s>0, relationship (40) must be satisfied.

$$\tau'' < -K \cdot (Kp \cdot x1 + x2) \cdot J \qquad \ldots (40)$$

When s>0 and Kp·x1+x2>0 , equation (41) satisfies the relationship (40), and when s>0 and Kp·x1+x2<0 , equation (42) satisfies the relationship (40).

$$\tau'' = -K \cdot (Kp \cdot x1 + x2) \cdot nJ0 \cdot (1 + \alpha) \qquad \ldots (41)$$

$$\tau'' = -K \cdot (Kp \cdot x1 + x2) \cdot J0 \cdot (1 - \alpha) \qquad \ldots (42)$$

(ii) On the other hand, when s<0, the following relationship (43) must be satisfied.

$$\tau'' > -K \cdot (Kp \cdot x1 + x2) \cdot J \qquad \ldots (43)$$

When s<0 and Kp•x1+x2>0 , equation (44) satisfies the relationship (43), and when s<0 and Kp•x1+x2<0 , equation (45) satisfies the relationship (43).

$$\tau'' = -K \cdot (Kp \cdot x1 + x2) \cdot J0 \cdot (1 - \alpha) \quad \ldots (44)$$

$$\tau'' = -K \cdot (Kp \cdot x1 + x2) \cdot nJ0 \cdot (1 + \alpha) \quad \ldots (45)$$

Here, $\epsilon = x1$, $\dot{\epsilon} = x2$, $\int_{\epsilon} = x3$ and $\int \epsilon = x4$ are substituted into equation (35), thereby obtaining equation (46).

$$s = x2 + C \cdot x1 + K \cdot x3 + K \cdot Kp \cdot x4 \quad \ldots (46)$$

The switching amount $\tau'$ for causing the characteristics of the control system to converge to the switching plane s can be expressed by equations (47) to (50) which respectively correspond to equations (17), (18), (21) and (22), depending on whether the switching plane s and the position deviation x1 are positive or negative.

(a) When s > 0 and x1 > 0,

$$\tau' = -(\omega c/n)^2 \cdot J0 \cdot x1 + (\omega c/n)^2 \cdot J0 \cdot x1 \cdot \alpha$$
$$\ldots (47)$$

(b) When s > 0 and x1 < 0,

$$\tau' = -(\omega c/n)^2 \cdot nJ0 \cdot x1 - (\omega c/n)^2 \cdot J0 \cdot x1 \cdot \alpha$$
$$\ldots (48)$$

(c) When s < 0 and x1 > 0,

$$\tau' = -(\omega c/n)^2 \cdot nJ0 \cdot x1 - (\omega c/n)^2 \cdot J0 \cdot x1 \cdot \alpha$$
$$\ldots (49)$$

(d) When s < 0 and x1 < 0,

$$\tau' = -(\omega c/n)^2 \cdot J0 \cdot x1 + (\omega c/n)^2 \cdot J0 \cdot x1 \cdot \alpha$$
$$\ldots (50)$$

The switching amount $\tau''$ for causing the characteristics of the control system to converge to the switching plane s can be expressed by equations (51) to (54) which respectively correspond to equations (41), (42), (44) and (45), depending on whether the switching plane s and the discrimination reference value (Kp•x1+x2) are positive or negative.

(a) When s > 0 and Kp·x1+x2 > 0,

$$\tau'' = -K \cdot (Kp \cdot x1 + x2) \cdot nJ0 \cdot (1 + \alpha) \quad \ldots (51)$$

(b) When s > 0 and Kp·x1+x2 < 0,

$$\tau'' = -K \cdot (Kp \cdot x1 + x2) \cdot J0 \cdot (1 - \alpha) \quad \ldots (52)$$

(c) When s < 0 and Kp·x1+x2 > 0,

$$\tau'' = -K \cdot (Kp \cdot x1 + x2) \cdot J0 \cdot (1 - \alpha) \quad \ldots (53)$$

(d) When s < 0 and Kp·x1+x2 < 0,

$$\tau'' = -K \cdot (Kp \cdot x1 + x2) \cdot nJ0 \cdot (1 + \alpha) \quad \ldots (54)$$

Thus, the switching amounts $\tau'$ and $\tau''$ for causing the characteristics of the control system to converge to the switching plane s can be derived in the above-described manner. The switching amount $\tau'$ is derived by a corresponding one of equations (47) to (50), selected depending on whether the switching plane s and the position deviation x1 (= $\epsilon$) are positive or negative, and the switching amount $\tau''$ is derived by a corresponding one of equations (51) to (54), selected depending on whether the switching plane s and the discrimination reference value (Kp·x1 + x2) are positive or negative. The motor is driven in accordance with a torque command $\tau$ corresponding to the sum of the derived values $\tau'$ and $\tau''$.

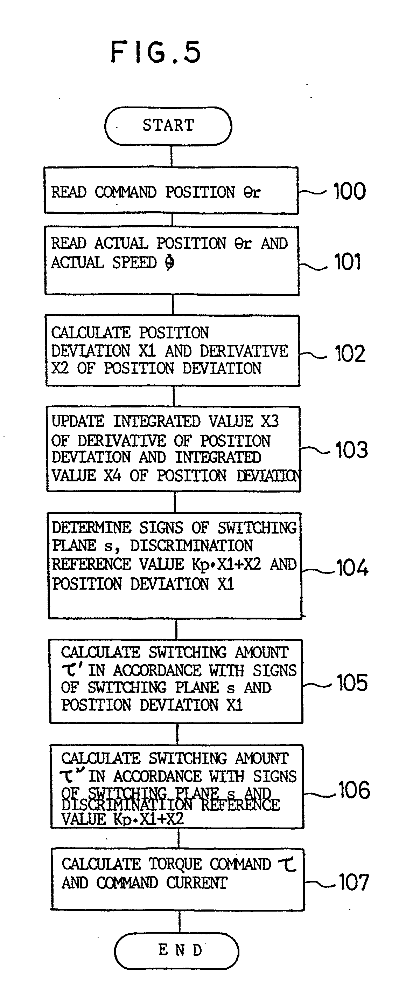

In this case, the conditions of the Lyapunov stability are satisfied, and therefore, the characteristics of the motor control system of Fig. 2 converge to the switching plane s , and the response characteristics of the control system are determined by the switching plane s . In other words, the characteristics of the control system are not varied even when the plant parameters such as the inertia relating to the motor control system are varied. Thus, a robust motor control system can be realized. Further, since the velocity control loop includes an integral element, the steady-state deviation can be made zero, thereby improving the stability of the control system. Fig. 5 shows a case wherein the motor operation is converged to the switching plane s when $\dot{\epsilon} = -C\epsilon$ is fulfilled.

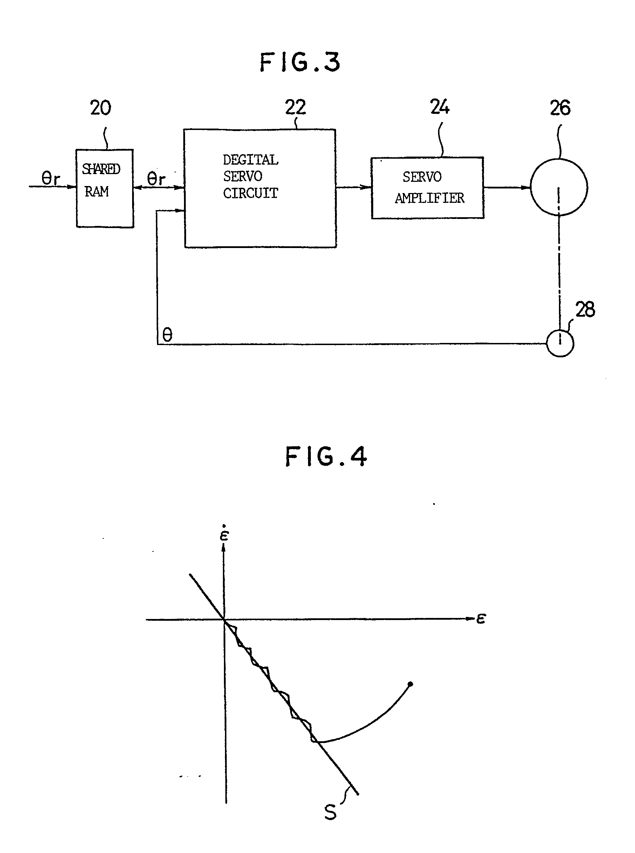

Now, a digital servo (software servo) control system for embodying the sliding mode control method of the above embodiment will be described with reference to Fig. 3.

The servo control system comprises a digital servo circuit 22 accommodating therein a processor (not shown), and adapted to carry out software processing for position, velocity and current control operations of a servomotor 26. In other words, the servo control system has a position control loop, a velocity control loop and a current control loop. The servo control system further includes a shared memory 20, which is formed of a RAM and which can be accessed both by the processor of the digital servo circuit 22 and by the processor of a numerical control device (not shown), a servo amplifier 24 for driving the servomotor 26 in accordance with a current command from the digital servo circuit 22, and a pulse coder 28 mounted on the servomotor 26.

The digital servo circuit 22 is arranged to respond to a feedback pulse train supplied from the pulse coder 28, during the rotation of the servomotor 26, so as to detect the present actual position $\theta$ and actual rotational speed $\dot{\theta}$ of the servomotor 26, and store the detected position and speed respectively in first and second registers (not shown) provided in the processor of the circuit 22. The processor is further provided with third and fourth registers (neither is shown) for storing the integrated value of the derivative of the position deviation and the integrated value of the position deviation, respectively, and fifth to seventh registers (none is shown) for storing constants C, K and Kp for the sliding mode control.

The operation of the servo control system of Fig. 3 will be now described with reference to Fig. 4.

9

The processor of the digital servo circuit 22, periodically executes the process of Fig. 4. Namely, in each cycle, the processor first reads out the command position $\theta r$, which is written into the shared RAM 20 from the numerical control device (not shown) in a corresponding pulse distribution period (step 100), and then reads out the actual position $\theta$ and actual speed $\dot{\theta}$ of the servomotor 26 from the first and second registers, respectively (step 101).

Next, the processor derives a position deviation x1 ($= \epsilon$) by subtracting the actual position $\theta$ from the command position $\theta r$, and computes the derivative x2 ($= \dot{\epsilon}$) of the position deviation by inverting the sign of the actual speed $\dot{\theta}$ (step 102). Then, the stored value of the third register representing the integrated value x3 ($= \int \dot{\epsilon}$) of the derivative of the position deviation obtained until the preceding period is updated to the sum (x3 + x2) of the register value x3 and the derivative x2 of the position deviation obtained in step 102, and the stored value of the fourth register representing the integrated value x4 ($= \int \epsilon$) of the position deviation obtained until the preceding period is updated to the sum (x4 + x1) of the register value x4 and the position deviation x1 obtained in step 102 (step 103).

Further, the processor calculates the switching plane s by equation (46), based on the values x1 to x4 obtained in steps 102 and 103 and the preset constants C, K and Kp, and derives the discrimination reference value (Kp•x1+x2) . Then, it is determined whether the switching plane s , the discrimination reference value (Kp•x1+x2) and the position deviation x1 are positive or negative (step 104).

Next, the processor calculates the switching amount $\tau'$ according to whether the switching plane s and the position deviation x1 are positive or negative (step 105). More specifically, to calculate the switching amount $\tau'$, equation (47) is used when s>0 and x>0. Likewise, equations (48), (49) and (50) are used respectively when s>0 and x<0, when s<0 and x>0, and when s<0 and x<0.

Further, the processor calculates the switching amount $\tau''$ according to whether the switching plane s and the discrimination reference value (Kp•x1+x2) are positive or negative (step 106). More specifically, to calculate the switching amount $\tau''$, equation (51) is used when s>0 and (Kp•x1+x2)>0 . Likewise, equations (52), (53) and (54) are used respectively when s>0 and (Kp•x1+x2)<0 , when s<0 and (Kp•x1+x2)>0 , and when s<0 and (Kp•x1+x2)<0 .

Then, the processor adds up the switching amounts $\tau'$ and $\tau''$ to derive a torque command $\tau$ ($= \tau' + \tau''$) (step 107), and, in the current control loop process, calculates a command current to be supplied to the servo amplifier 24, on the basis of the torque command $\tau$.

## Claims

1. A sliding mode control method, comprising the steps of:
   (a) determining a switching plane of sliding mode control in accordance with at least one predetermined parameter representing characteristics of a control system having a position control loop and a velocity control loop for carrying out integral control to calculate a control output; and
   (b) calculating the control output such that the control output converges to the switching plane.

2. A sliding mode control method according to claim 1, wherein said method is applied to a control system having a position control loop for carrying out proportional control, a velocity control loop for carrying out proportional-plus-integral control to calculate a torque command, and a current control loop responsive to the torque command; and wherein the torque command is derived as the control output, in said steps (b).

3. A sliding mode control method according to claim 1, wherein said step (a) includes steps of: (a1) periodically detecting a command position, an actual position and an actual speed; (a2) calculating, as said at least one predetermined parameter, a position deviation, a derivative of the position deviation, an integrated value of the position deviation, and an integrated value of the derivative of the position deviation in accordance with the detected values; and (a3) calculating the switching plane in accordance with the calculated values.

4. A sliding mode control method according to claim 3, wherein said step (b) includes steps of: (b1) calculating a discrimination reference value in accordance with the position deviation and the derivative of the position deviation respectively calculated in said step (a2); and (b2) calculating the control output according to whether the switching plane, the calculated position deviation and the calculated discrimination reference value are positive or negative.

10

5. A sliding mode control method according to claim 4, wherein said method is applied to a control system having a position control loop for carrying out proportional control, a velocity control loop for carrying out proportional-plus-integral control to calculate a torque command, and a current control loop responsive to the torque command; and wherein, the torque command is derived as the control output, in said step (b2).

# FIG.1

# FIG.2

EP 0 423 351 A1

## FIG.3

## FIG.4

# FIG.5

START

READ COMMAND POSITION θr — 100

READ ACTUAL POSITION θr AND ACTUAL SPEED φ̇ — 101

CALCULATE POSITION DEVIATION X1 AND DERIVATIVE X2 OF POSITION DEVIATION — 102

UPDATE INTEGRATED VALUE X3 OF DERIVATIVE OF POSITION DEVIATION AND INTEGRATED VALUE X4 OF POSITION DEVIATION — 103

DETERMINE SIGNS OF SWITCHING PLANE s, DISCRIMINATION REFERENCE VALUE Kp·X1+X2 AND POSITION DEVIATION X1 — 104

CALCULATE SWITCHING AMOUNT $\tau'$ IN ACCORDANCE WITH SIGNS OF SWITCHING PLANE s AND POSITION DEVIATION X1 — 105

CALCULATE SWITCHING AMOUNT $\tau''$ IN ACCORDANCE WITH SIGNS OF SWITCHING PLANE s AND DISCRIMINATION REFERENCE VALUE Kp·X1+X2 — 106

CALCULATE TORQUE COMMAND $\tau$ AND COMMAND CURRENT — 107

END

14

# INTERNATIONAL SEARCH REPORT

International Application No **PCT/JP90/00224**

## I. CLASSIFICATION OF SUBJECT MATTER (if several classification symbols apply, indicate all) [6]

According to International Patent Classification (IPC) or to both National Classification and IPC

Int. Cl$^5$ G05B13/00

## II. FIELDS SEARCHED

Minimum Documentation Searched [7]

| Classification System | Classification Symbols |
|---|---|
| IPC | G05B13/00, G05D3/12, H02P5/06 |

Documentation Searched other than Minimum Documentation
to the Extent that such Documents are Included in the Fields Searched [8]

| | |
|---|---|
| Jitsuyo Shinan Koho | 1971 - 1990 |
| Kokai Jitsuyo Shinan Koho | 1971 - 1990 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 60-189019 (Yasukawa Electric Mfg. Co., Ltd.), 26 September 1985 (26. 09. 85) | 1,2,3,4,5 |
| Y | JP, A, 61-267105 (Yasukawa Electric Mfg. Co., Ltd.), 26 November 1986 (26. 11. 86) | 1 - 5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 22, 1990 (22. 05. 90) | June 4, 1990 (04. 06. 90) |

| International Searching Authority | Signature of Authorized Officer |
|---|---|
| Japanese Patent Office | |

Form PCT/ISA/210 (second sheet) (January 1985)